# EUROPÄISCHE PATENTSCHRIFT

(11) **EP 2 299 541 B1**
(45) Veröffentlichungstag und Bekanntmachung des Hinweises auf die Patenterteilung: **11.01.2017**
(21) Anmeldenummer: 10008637.0
(22) Anmeldetag: 19.08.2010
(51) Int. Cl.: H01R 4/26, H01R 4/28, F16B 7/04

(54) **Klemmbauteil mit einer Schneide zur Herstellung einer elektrisch leitenden Verbindung**
Clamp component with a cutting edge for producing an electrically conductive connection
Composant de serrage doté d'une lame pour la fabrication d'une connexion électrique

(30) Priorität: 18.09.2009 DE 102009042238
(43) Veröffentlichungstag der Anmeldung: 23.03.2011
(73) Patentinhaber: Robert Bosch GmbH, 70469 Stuttgart (DE)
(72) Erfinder: Buttau, Hans-Peter, 74348 Lauffen (DE); Hinderer, Mario, 74427 Fichtenberg - Langert (DE)
(74) Vertreter: Maiß, Harald

(56) Entgegenhaltungen:
- EP-A2- 0 088 321
- DE-U1-202008 010 044
- JP-A- 2003 172 323

## Beschreibung

Die Erfindung betrifft ein Klemmbauteil gemäß dem Oberbegriff von Anspruch 1 und eine Verbindungsanordnung mit einem derartigen Klemmbauteil.

Aus der DE 85 29 610 U1 ist ein Klemmbauteil in Form einer Hammermutter bekannt. Gemäß den Figuren 2 und 3 der DE 85 29 610 U1 umfasst das Klemmbauteil 42 einen insgesamt T-förmigen Grundkörper, an dem zwei Klemmflächen 50; 52 vorgesehen sind, die in einer Ebene liegen. Zwischen den beiden Klemmflächen ist ein Eingriffsmittel 48 in Form eines Gewindes vorgesehen, über den das Klemmbauteil mit dem in der Fig. 1 der DE 85 29 610 U1 dargestellten Profilkörper 10 verklemmt werden kann. Das Klemmbauteil wird hierbei mittels eines Schraubbolzens 40 gegen eine T-förmige Nut 26 des Profilkörpers geklemmt.

Bei dem Profilkörper handelt es sich um ein stranggepresstes Aluminiumprofil. Unter einem Profilkörper wird demnach ein langgestreckter Körper verstanden, der über seine gesamte Länge eine im Wesentlichen konstante Querschnittsform aufweist. Ein derartiger Profilkörper besitzt an der Oberfläche eine elektrisch nicht leitende Schicht aus Aluminiumoxid, so dass Maßnahmen ergriffen werden müssen, um eine elektrisch leitende Verbindung zwischen dem Klemmbauteil und dem Profilkörper herzustellen. Eine elektrisch leitende Verbindung zwischen den genannten Bauteilen ist erforderlich, um elektrostatische Aufladungen und entsprechende Entladungen zu verhindern, die beispielsweise zu Beschädigung an elektronischen Bauteilen führen können, die im Umfeld des Klemmbauteils bearbeitet werden. Die Vermeidung solcher Phänomene ist beispielsweise Gegenstand der DIN EN 61340-5-2. Demnach ist zwischen dem Profilkörper und dem Klemmbauteil eine elektrisch leitende Verbindung mit einem Widerstand in der Größenordnung zwischen 0,1 und 1000 MΩ anzustreben, um einerseits elektrostatische Aufladungen zu vermeiden und andererseits die Stromstärken von elektrostatischen Entladungen so klein zu halten, dass beispielsweise elektronische Bauteile nicht geschädigt werden können.

Zur Lösung dieses Problems ist bei der DE 85 29 610 U1 eine Mehrzahl von Schneiden 54 an den Klemmflächen vorgesehen, wobei die geraden Schneidenkanten der Schneiden parallel zu den ebenen Klemmflächen angeordnet ist. Die Schneiden dringen in den Profilkörper ein und durchbrechen dabei dessen elektrisch isolierende Oberflächenschicht, so dass eine elektrisch leitende Verbindung zwischen dem Profilkörper und dem Klemmbauteil besteht. Der Widerstand der elektrisch leitenden Verbindung kann über die Abmessungen der Schneiden so eingestellt werden, dass er in der oben genannten Größenordnung liegt.

Aus der JP 2003-172 323 A ist ein weiteres Klemmbauteil bekannt. Gemäß der Fig. 2 der JP 2003-172 323 A ist das Klemmbauteil 2 insgesamt halbschalenförmig aufgebaut, wobei an einem Längsende des Klemmbauteils eine Kralle 5 vorgesehen ist. Gemäß der Fig. 1 der JP 2003-172 323 A werden zwei rohrartige Profilkörper 11; 12 mittels zweier identischer Klemmbauteile im rechten Winkel miteinander verbunden, wobei die beiden Klemmbauteile mittels eines einzigen Schraubbolzens mit den beiden Profilkörpern verklemmt werden. Derartige Klemmbauteile können besonders kostengünstig aus Zink oder einer Zinklegierung bzw. aus Aluminium oder einer Aluminiumlegierung im Druckgussverfahren hergestellt werden.

Hierbei ergibt sich das Problem, dass die aus der DE 85 29 610 U1 bekannten Schneiden nicht ohne weiteres auf ein Klemmbauteil aus Zink oder einer Zinklegierung bzw. aus Aluminium oder einer Aluminiumlegierung übertragen werden können, weil Zink bzw. Aluminium eine deutlich geringere Festigkeit aufweist als der Stahl der Hammermutter. Insbesondere ist damit zu rechnen, dass sich die Schneiden während des Klemmvorgangs plastisch verformen, wobei sie nicht in den Profilkörper eindringen. In der Folge wird die elektrisch isolierende Oberflächenschicht des Profilkörpers nicht durchbrochen, so dass es nicht zu einer elektrisch leitenden Verbindung zwischen dem Klemmbauteil und dem Profilkörper kommt. Zusätzlich ergibt sich das Problem, dass die Klemmflächen wegen der verformten Schneiden nicht mehr vollflächig an dem Profilkörper anliegen. Im Bereich der verformten Schneiden kommt es daher zu Spannungsüberhöhungen, die mit der Zeit zum Kriechen des Aluminiummaterials des Profilkörpers führen, so dass sich die Klemmverbindung löst.

Aus der EP 88 321 A2 ist ein Klemmbauteil bekannt, das mit mehreren Spitzen an einem Profilkörper anliegt. Beim Festklemmen des Klemmbauteils berühren die Spitzen den Profilkörper zuerst punktförmig, wobei anschließend ein sich vergrößernder Bereich der Spitzen in den Profilkörper eindringt. Die Klemmkraft wird dabei ausschließlich über die Spitzen übertragen. Eine von den Spitzen gesonderte Klemmfläche, die an den Profilkörper angepasst ist, um eine Klemmkraft zu übertragen, ist nicht vorgesehen. Die Spitzen sind aus Stahl ausgebildet, damit sie sich beim Eindringen in das Profilteil nicht plastisch verformen.

Die Aufgabe der Erfindung besteht in der Überwindung der vorgenannten Probleme. Gemäß dem selbständigen Anspruch wird diese Aufgabe dadurch gelöst, dass die Schneidkante bezüglich der Klemmfläche derart geneigt und/oder gekrümmt angeordnet ist, dass während des Festklemmens des Klemmbauteils am Profilkörper die Schneidkante den Profilkörper zuerst punktförmig berührt, wobei anschließend ein sich vergrößernder Bereich der Schneidkante in den Profilkörper eindringt. Durch diese Maßnahe wird erreicht, dass das Eindringen der Schneide in den Profilkörper an einem kleinen exakt definierten Punkt beginnt. Dies bewirkt, dass am Anfang des Eindringvorgangs besonders geringe und darüber hinaus definierte Kräfte auf die Schneide einwirken. Die Schneide kann daher so bemessen werden, dass plastische Verformungen sicher ausgeschlossen sind. Damit ist sicher gestellt, dass die nur wenige µm dicke Oxidschicht des Profilkörpers durchbrochen wird.

Beim weiteren Eindringen der Schneide in den Profilkörper vergrößert sich anschließend der Kontaktbereich zwischen der Schneide und dem Profilkörper, so dass es zu einem Anstieg der Verformungskräfte kommt. Versuche der Anmelderin haben gezeigt, dass mit der vorgeschlagenen Lösung in jedem Fall sichergestellt ist, dass die Schneide so tief in den Profilkörper eindringt, dass die Klemmflächen des Klemmbauteils vollflächig am Profikörper anliegen, wobei gleichzeitig ein ausreichender Widerstand der elektrisch leitenden Verbindung vorhanden ist.

Die Schneidkante ist bezüglich der Klemmfläche konvex gekrümmt. Damit findet die erste punktförmige Berührung am höchsten Punkt der konvex gekrümmten Schneidkante statt. Je nach der Art und Weise, wie das Klemmbauteil mit dem Profilkörper in Kontakt gebracht wird, kann die Lage dieses höchsten Punktes durchaus etwas variieren, ohne dass die erfindungsgemäße Wirkung der Schneidkante beeinträchtigt wird. Dieser Effekt ist besonders ausgeprägt, wenn die Schneidkante kreisförmig oder ellipsenförmig gekrümmt ist. Unter einer konvexen gekrümmten Schneidkante soll jedoch auch eine Schneidkante verstanden werden, die aus mehreren Einzelgeraden zusammengesetzt ist, die zusammen einen im Wesentlichen konvexen Bogen definieren. Die Ecken eines derartigen Bogens bilden dabei vorzugsweise den höchsten Punkt, an dem der erste punktförmige Kontakt mit dem Profilkörper stattfindet.

Die Schneidkante ist Wesentlichen quer zu einer Längsachse des Profilkörpers angeordnet. Die Klemmkraft, mit der das Klemmbauteil am Profilkörper verklemmt wird, ist in aller Regel quer zur Längsachse des Profilkörpers ausgerichtet. Die vorgeschlagene Ausrichtung der Schneidkante bewirkt also, dass diese parallel zur Klemmrichtung ausgerichtet ist. Damit schneidet sich die Schneide ähnlich wie ein Messer in den Profilkörper ein, so dass sich eine besonders gute Schneidwirkung der Schneide ergibt. Folglich sind besonders geringe Kräfte erforderlich, damit die Schneide in den Profilkörper eindringt.

In den abhängigen Ansprüchen sind vorteilhafte Weiterbildungen und Verbesserungen der Erfindung angegeben.

An dem Klemmbauteil kann ein bezüglich der Klemmfläche vertieft ausgeführter Oberflächenabschnitt vorgesehen sein, wobei die Schneide im Bereich des vertieften Oberflächenabschnitts angeordnet ist. Hiermit soll erreicht werden, dass der Überstand der Schneide über der Klemmfläche besonders gering ausgeführt werden kann, damit nur geringe Verformungen am Profilkörper auftreten. Die erforderliche Klemmkraft ist damit so gering, dass ein einziges Klemmmittel, beispielsweise ein einziger Schraubbolzen, ausreicht, um diese aufzubringen. Eine Schneide mit derart geringer Höhe lässt sich jedoch nicht ohne Weiteres im Druckgussverfahren herstellen, da hierbei alle Ecken, insbesondere die Ecken am Fuß der Schneide, mit einem Radius versehen werden müssen, der eine vorgegebene Mindestgröße aufweisen muss. Die Vertiefung ist daher so tief ausgeführt, dass der Eckenradius vollständig innerhalb der Vertiefung angeordnet ist und nicht mit dem Profilkörper in Kontakt kommen kann. Sollte es trotz der erfindungsgemäßen Ausgestaltung der Schneide doch zu plastischen Verformung an dieser kommen, so hat die Vertiefung überdies den Vorteil, dass sich die Schneide in die Vertiefung hinein verformen kann, wodurch gewährleistet ist, dass der Profilkörper auch in diesem Fall vollflächig an der Klemmfläche anliegt.

Der vertiefte Oberflächenabschnitt ist bevorzugt benachbart zur oder innerhalb der Klemmfläche angeordnet, damit die Schneiden in dem Bereich des Klemmbauteils angeordnet sind, in dem die höchsten Klemmkräfte wirken.

Der höchste Punkt der Schneidkante steht bevorzugt zwischen 0,4 und 0,6 mm über die Klemmfläche über. Mit diesen Abmessungen ergibt sich ein elektrischer Übergangswiderstand, der den weiter oben angegebenen Werten entspricht.

Die Schneidkante kann mit einem Schneidenradius versehen sein, wobei der Schneidenradius vorzugsweise zwischen 0,1 und 0,2 mm beträgt. Eine ideal spitze Schneidkante könnte sich beim Eindringen in den Profilstab undefiniert plastisch verformen. Dies ist darauf zurückzuführen, dass an einer ideal punktförmigen ersten Berührstelle theoretisch unendlich große Flächenpressungen auftreten. Durch den vorgeschlagenen Schneidenradius werden die auftretenden Flächenpressungen so weit reduziert, dass plastische Verformungen an der Schneidkante im Wesentlichen nicht auftreten. Die Größe des Schneidenradius wird in erster Linie durch die bevorzugte Druckgussherstellung des Klemmbauteils bestimmt. Hierbei wird insbesondere der kleinste definierte herstellbare Schneidenradius verwendet, wobei sich der oben angegebene Abmessungsbereich als besonders vorteilhaft erwiesen hat.

Die Klemmfläche kann im Wesentlichen kreiszylinderförmig ausgeführt sein, wobei die Schneidkante im Wesentlichen tangential zur Klemmfläche angeordnet ist. Hierdurch soll erreicht werden, dass unabhängig von der genauen Art und Weise, wie das Klemmbauteil mit dem Profilkörper in Kontakt gebracht wird, in jedem Fall der punktförmige Erstkontakt der Schneidkante mit dem Profilkörper in dem dafür vorgesehenen Bereich der Schneidkante stattfindet. Soweit eine Schneidkante zur Anwendung kommt, die erfindungsgemäß gerade und geneigt zur Klemmfläche ausgeführt ist, soll durch die Formulierung "im Wesentlichen tangential" zum Ausdruck gebracht werden, dass gegenüber der Tangente eine geringe Neigung vorhanden ist.

Das Klemmbauteil kann in Form einer Halbschale ausgeführt sein, wobei der vertiefte Oberflächenabschnitt an wenigstens einem längsseitigen Rand der Halbschale vorgesehen ist. In der Folge erstreckt sich die Klemmfläche nicht über den gesamten Umfangsbereich der Halbschale, so dass auch bei toleranzbedingten Formabweichungen der Klemmfläche gegenüber dem Profilkörper eine vollflächige Anlage zwischen Klemmbauteil und Profilkörper gegeben ist. Bevorzugt sind an beiden längsseitigen Rändern des Klemmbauteils vertiefte Oberflächenabschnitte vorgesehen, die mit einer Schneide versehen sind.

Das Klemmbauteil kann im Bereich der Klemmfläche mit einem Ausrichtvorsprung versehen sein, der in eine in Längsrichtung verlaufende Nut des Profilkörpers eingreifen kann. Mit dem Ausrichtvorsprung soll das Klemmbauteil so gegenüber dem Profilkörper ausgerichtet werden, dass ausgeschlossen ist, dass die Schneide in die in Längsrichtung verlaufende Nut des Profilkörpers eintaucht. Demnach ist sichergestellt, dass die Schneide die gewünschte elektrisch leitende Verbindung zum Profilkörper herstellt, auch wenn dieser eine in Längsrichtung verlaufende Nut aufweist.

Die Erfindung wird im Folgenden anhand der beigefügten Zeichnungen näher erläutert. Es stellt dar:
- Fig. 1: eine perspektivische Ansicht einer erfindungsgemäßen Verbindungsanordnung;
- Fig. 1a: einen Längsschnitt der Verbindungsanordnung gemäß Fig. 1;
- Fig. 2: eine Explosionsansicht der zwei erfindungsgemäßen Klemmbauteile, die in der Verbindungsanordnung gemäß Fig. 1 zum Einsatz kommen;

- Fig. 3: einen Längsschnitt des Klemmbauteils gemäß Fig. 2;
- Fig. 4: eine Seitenansicht einer erfindungsgemäßen Schneide;
- Fig. 5: einen Querschnitt der Schneide gemäß Fig. 4;
- Fig. 6: eine Draufsicht der Schneide gemäß Fig. 4;
- Fig. 7: eine grobschematische Darstellung des Klemmvorgangs zwischen dem Klemmbauteil zu einem Zeitpunkt, an dem die Schneide punktförmig an dem Profilkörper anliegt; und
- Fig. 7a: eine Darstellung entsprechend Fig. 7 zu einem Zeitpunkt, an dem der Profilkörper vollflächig an der Klemmfläche anliegt.

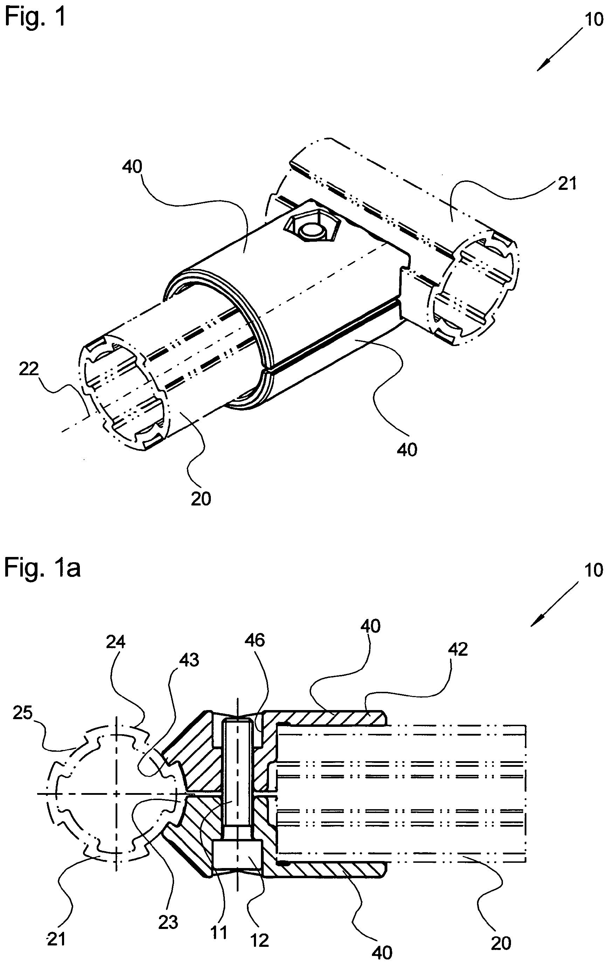

Fig. 1 und Fig. 1a zeigt eine Verbindungsanordnung 10 bestehend aus einem ersten 20 und einem zweiten Profilkörper 21, die über zwei identische erfindungsgemäße Klemmbauteile 40 im rechten Winkel miteinander verbunden sind. Die beiden Profilkörper 20; 21 sind aus Aluminium stranggepresst, so dass sie entlang ihrer Längsachse 22 eine konstante Querschnittsform aufweisen, die im Wesentlichen rohrartig ausgeführt ist. An den Profilkörpern 20; 21 sind jeweils vier hinterschnittene Vorsprünge 23 vorgesehen, wobei die Krallen 43 der Klemmbauteile 40 formschlüssig in die hinterschnittenen Vorsprünge 23 des zweiten Profilkörpers 21 eingreifen, so dass die Klemmbauteile 40 fest mit dem zweiten Profilkörper 21 verbunden sind.

Der erste Profilkörper 20 ist an den radialen Außenoberflächen 24 der hinterschnittenen Vorsprünge 23 zwischen den beiden im Wesentlichen halbschalenförmig ausgebildeten Klemmbauteilen 40 geklemmt. Die radialen Außenoberflächen 24 der vier hinterschnittenen Vorsprünge 23 definieren hierbei einen Kreiszylinder, an den die Halbschalen 42 der beiden Klemmbauteile 40 angepasst sind. Die beiden Klemmbauteile 40 werden von einem Schraubbolzen 11 durchsetzt, der in eine (nicht dargestellte) Sechskantmutter eingeschraubt ist, die in ein Eingriffsmittel 46 in Form einer angepassten Ausnehmung unverdrehbar eingesetzt ist. Damit können die Klemmbauteile 40 durch Festdrehen des Schraubbolzens 11 mit den beiden Profilkörpern 20; 21 verklemmt werden, wobei der Kopf 12 des Schraubbolzens 11 in das Eingriffsmittel 46 des anderen Klemmbauteils 40 eingreift.

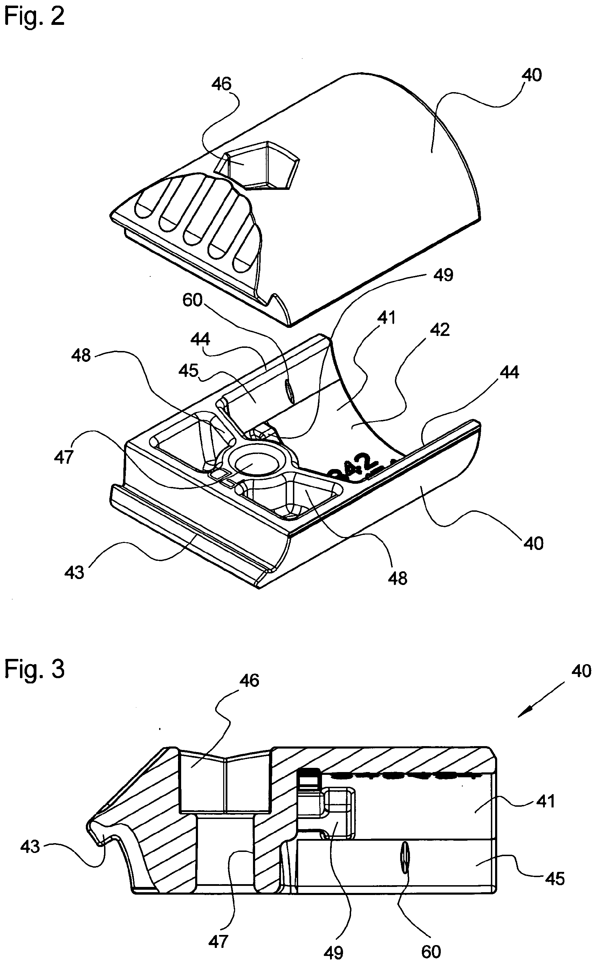

Fig. 2 zeigt die beiden Klemmbauteile 40 in einer Explosionsansicht. Die Klemmbauteile 40 sind für die Herstellung im Zink-Druckgussverfahren ausgelegt, weshalb besonderer Wert darauf gelegt wurde, dass die Klemmbauteile 40 überall im Wesentlichen gleiche Wanddicken aufweisen. Aus diesem Grund wurde die Durchgangsbohrung 47 für den Schraubbolzen mit mehreren Rippen 48 stabilisiert.

An den beiden längsseitigen Rändern 44 der Halbschale 42 des Klemmbauteils 40 ist je ein vertiefter Oberflächenabschnitt 45 vorgesehen, der gegenüber der kreiszylinderförmigen Klemmfläche 41 zurück versetzt ist. Innerhalb der beiden vertieften Oberflächenabschnitte 45 ist je eine erfindungsgemäße Schneide 60 angeordnet, die quer zur Längsachse (Nr. 22; Fig. 1) des ersten Profilkörpers und tangential zur kreiszylindrischen Klemmfläche 41 angeordnet ist.

Fig. 3 zeigt das Klemmbauteil 40 im Längsschnitt, wobei der Ausrichtvorsprung 49 im Bereich der Klemmfläche 41 zu erkennen ist. Der Ausrichtvorsprung 49 ist an die Nuten (Nr. 25; Fig. 1a) zwischen den hinterschnittenen Vorsprüngen des ersten Profilkörpers angepasst, so dass der erste Profilkörper nur in einer solchen Drehlage zwischen die beiden Klemmbauteile 40 eingebaut werden kann, in der gewährleistet ist, dass die radiale Außenoberfläche (Nr. 24; Fig. 1a) der hinterschnittenen Vorsprünge des ersten Profilkörpers in Kontakt mit den erfindungsgemäßen Schneiden 60 kommt. Ohne den Ausrichtvorsprung könnte es vorkommen, dass die Schneide 60 in die Nut (Nr. 25; Fig. 1a) zwischen den hinterschnittenen Vorsprüngen eintaucht, wobei die Schneide 60 den ersten Profilkörper nicht berührt, so dass in der Folge kein elektrischer Kontakt zwischen dem ersten Profilkörper und dem Klemmbauteil 40 vorhanden wäre. Darüber hinaus wird durch den Ausrichtvorsprung 49 verhindert, dass sich nach erfolgter Klemmung die Klemmbauteile 40 gegenüber dem ersten Profilkörper um die Längsachse verdrehen können. Der Ausrichtvorsprung 49 ist in der Nähe der Durchgangsbohrung 47 für den Schraubbolzen angeordnet, damit das Klemmbauteil auch in Verbindung mit einem vollständig kreiszylindrischen Rohr verwendet werden kann. Letztgenanntes wird nur bis zum Ausrichtvorsprung 49 in das Klemmbauteil 40 eingeschoben.

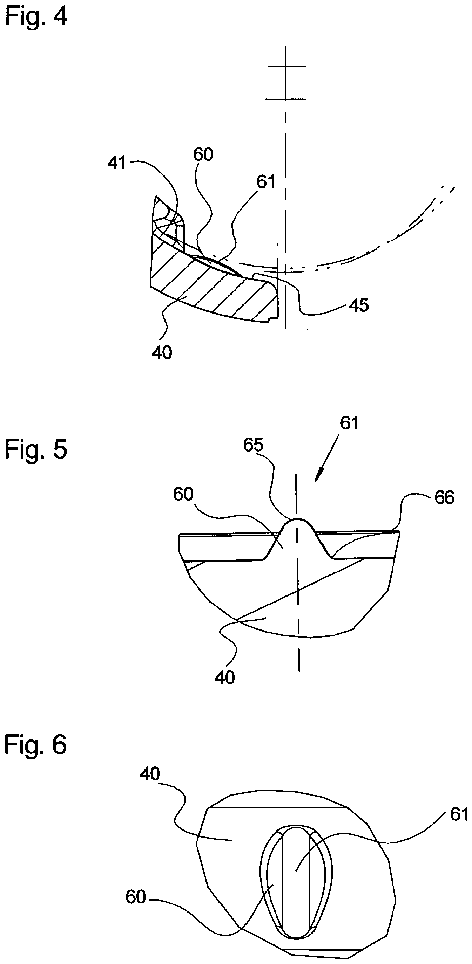

Fig. 4 zeigt eine Seitenansicht der Schneide 60, in der die bezüglich der Klemmfläche 41 konvex gekrümmte Schneidkante 61 der Schneide 60 zu erkennen ist. Die Schneidkante 61 ist hierbei in Form eines Kreisbogens ausgeführt.

Fig. 5 zeigt die Schneide 60 im Querschnitt, wobei insbesondere auf den Schneidenradius 65 an der Schneidkante 61 hinzuweisen ist. Der Schneidenradius 65 beträgt im vorliegenden Ausführungsbeispiel höchstens 0,2 mm. Weiter ist auf den Eckenradius 66 am Fuß der Schneide hinzuweisen, der aufgrund der Herstellung des Klemmbauteils 40 im Druckgussverfahren erforderlich ist. Der oben erwähnte vertiefte Oberflächenabschnitt (Nr. 45; Fig. 2) ist hierbei so tief ausgeführt, dass der Eckenradius 66 vollständig innerhalb der Vertiefung angeordnet ist.

Fig. 6 zeigt eine Draufsicht der Schneide 60, wobei zu erkennen ist, dass die Schneidkante 61 bezüglich dieser Blickrichtung, also quer zur Längsachse (Nr. 22; Fig. 1) des ersten Profilkörpers, exakt geradlinig verläuft.

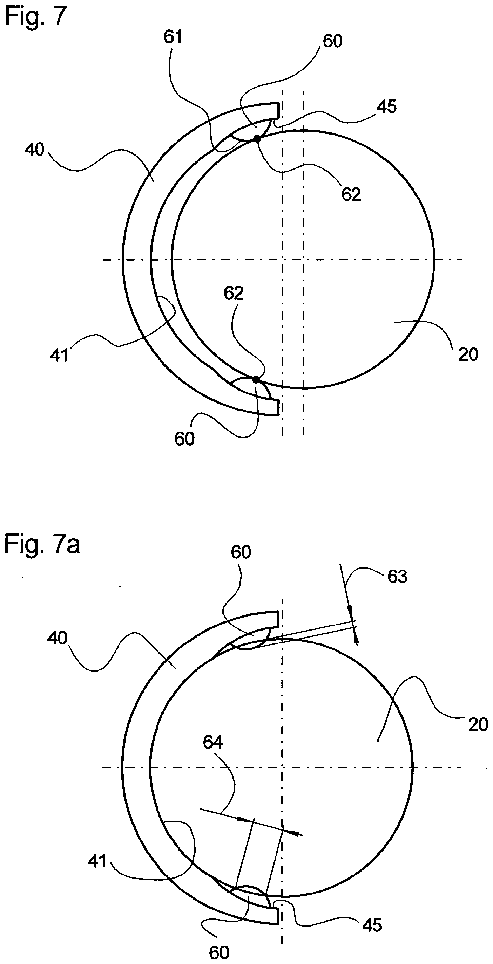

Fig. 7 und Fig. 7a zeigen grobschematisch zwei Stadien des Klemmvorgangs zwischen einem Klemmbauteil 40 und dem Profilkörper 20. Der Übersichtlichkeit halber wurde auf die Darstellung des anderen Klemmbauteils verzichtet. In Fig. 7 liegt der Profilkörper 20 am höchsten Punkt 62 der beiden Schneiden 60 punktförmig an, wobei er mit Abstand zur Klemmfläche 41 angeordnet ist. In Fig. 7a liegt der Profilkörper 20 vollflächig an der Klemmfläche 41 an, wobei die beiden Schneiden 60 in den Profilkörper 20 eingedrungen sind. Insbesondere ist ein nicht nur punktförmiger Bereich 64 der Schneidkante in den Profilkörper 20 eingedrungen.

In Fig. 7a ist der vertiefte Oberflächenabschnitt 45 des Klemmbauteils 40 besonders gut zu erkennen. Weiter ist in Fig. 7a der Überstand 63 des höchsten Punktes 62 der Schneidkante über die Klemmfläche 41 angegeben.

### Bezugszeichenliste

- 10: Verbindungsanordnung
- 11: Schraubbolzen
- 12: Kopf des Schraubbolzens

- 20: erster Profilkörper
- 21: zweiter Profilkörper
- 22: Längsachse
- 23: hinterschnittener Vorsprung
- 24: radiale Außenoberfläche
- 25: Nut

- 40: Klemmbauteil
- 41: Klemmfläche
- 42: Halbschale
- 43: Kralle
- 44: längsseitiger Rand
- 45: vertiefter Oberflächenabschnitt
- 46: Eingriffsmittel
- 47: Durchgangsbohrung
- 48: Rippe
- 49: Ausrichtvorsprung

- 60: Schneide
- 61: Schneidkante
- 62: höchster Punkt der Schneidkante
- 63: Überstand der Schneidkante
- 64: eingedrungener Bereich der Schneidkante
- 65: Schneidenradius
- 66: Eckenradius

## Patentansprüche

1. Klemmbauteil (40) aus Metall zum Klemmen eines Profilkörpers (20) aus Metall umfassend wenigstens eine an den Profilkörper (20) angepasste Klemmfläche (41) und wenigstens eine Schneide (60) mit einer Schneidkante (61), die über die Klemmfläche (41) übersteht, so dass die Schneide (60) in den Profilkörper (20) eindringen kann, wenn das Klemmbauteil (40) den Profilkörper (20) klemmt, wobei das Klemmbauteil (40) ein Eingriffsmittel (46) zum Einleiten einer Klemmkraft umfasst, wobei während des Festklemmens des Klemmbauteils (40) am Profilkörper (20) die Schneidkante (61) den Profilkörper (20) zuerst punktförmig berührt, wobei anschließend ein sich vergrößernder Bereich (54) der Schneidkante (61) in den Profilkörper (20) eindringt, **dadurch gekennzeichnet, dass** die Schneidkante (61) bezüglich der Klemmfläche (41) konvex gekrümmt ist und dass die Schneidkante (61) im Wesentlichen quer zu einer Längsachse (22) des Profilkörpers (20) angeordnet ist.

2. Klemmbauteil nach Anspruch 1,
**dadurch gekennzeichnet, dass** die Schneidkante (61) kreisförmig oder ellipsenförmig gekrümmt ist.

3. Klemmbauteil nach einem der vorstehenden Ansprüche,
**dadurch gekennzeichnet, dass** an dem Klemmbauteil (40) ein bezüglich der Klemmfläche (41) vertieft ausgeführter Oberflächenabschnitt (45) vorgesehen ist, wobei die Schneide (60) im Bereich des vertieften Oberflächenabschnitts (45) angeordnet ist.

4. Klemmbauteil nach Anspruch 3,
**dadurch gekennzeichnet, dass** der vertiefte Oberflächenabschnitt (45) benachbart zur oder innerhalb der Klemmfläche (41) angeordnet ist.

5. Klemmbauteil nach einem der vorstehenden Ansprüche,
**dadurch gekennzeichnet, dass** der höchste Punkt (62) der Schneidkante (61) zwischen 0,4 und 0,6 mm über die Klemmfläche (41) übersteht.

6. Klemmbauteil nach einem der vorstehenden Ansprüche,
**dadurch gekennzeichnet, dass** die Schneidkante (61) mit einem Schneidenradius (65) versehen ist, wobei der Schneidenradius (65) vorzugsweise zwischen 0,1 und 0,2 mm beträgt.

7. Klemmbauteil nach einem der vorstehenden Ansprüche,
**dadurch gekennzeichnet, dass** die Klemmfläche (41) im Wesentlichen kreiszylinderförmig ausgeführt ist, wobei die Schneidkante (61) im Wesentlichen tangential zur Klemmfläche (41) angeordnet ist.

8. Klemmbauteil nach Anspruch 7, rückbezogen auf Anspruch 3,
**dadurch gekennzeichnet, dass** das Klemmbauteil (40) in Form einer Halbschale (42) ausgeführt ist, wobei der vertiefte Oberflächenabschnitt (45) an wenigstens einem längsseitigen Rand (44) der Halbschale (42) vorgesehen ist.

9. Klemmbauteil nach Anspruch 8,
**dadurch gekennzeichnet, dass** das Klemmbauteil (40) im Bereich der Klemmfläche (41) mit einem Ausrichtvorsprung (49) versehen ist, der in eine in Längsrichtung (22) verlaufende Nut (25) des Profilkörpers (20) eingreifen kann.

10. Klemmbauteil nach einem der vorstehenden Ansprüche,
**dadurch gekennzeichnet, dass** das Klemmbauteil (40) aus Zink oder einer Zinklegierung oder aus Aluminium oder einer Aluminiumlegierung besteht.

11. Verbindungsanordnung (10) umfassend wenigstens einen Profilkörper (20) aus Metall und wenigstens ein Klemmbauteil (40) nach einem der vorstehenden Ansprüche, wobei die Klemmfläche (41) des Klemmbauteils (40) an den Profilkörper (20) angepasst ist, wobei das Klemmbauteil (40) über die Klemmfläche (41) mit dem Profilkörper (20) verklemmt ist, und wobei die Schneide (60) in den Profilkörper (20) eingedrungen ist.

## Claims

1. Clamping component (40) which is composed of metal for clamping a profile body (20) which is composed of metal, comprising at least one clamping face (41) which is matched to the profile body (20) and comprising at least one blade (60) with a cutting edge (61) which protrudes beyond the clamping face (41), so that the blade (60) can penetrate the profile body (20) when the clamping component (40) clamps the profile body (20), wherein the clamping component (40) comprises an engagement means (46) for introducing a clamping force, wherein, when the clamping component (40) is fixedly clamped on the profile body (20), the cutting edge (61) first makes contact with the profile body (20) at a point, wherein a region (54) of the cutting edge (61), which region increases in size, then penetrates the profile body (20), **characterized in that** the cutting edge (61) is convexly curved with respect to the clamping face (41), and **in that** the cutting edge (61) is arranged substantially transverse to a longitudinal axis (22) of the profile body (20).

2. Clamping component according to Claim 1, **characterized in that** the cutting edge (61) is curved in the form of a circle or in the form of an ellipse.

3. Clamping component according to either of the preceding claims, **characterized in that** a surface section (45) which is recessed with respect to the clamping face (41) is provided on the clamping component (40), wherein the blade (60) is arranged in the region of the recessed surface section (45).

4. Clamping component according to Claim 3, **characterized in that** the recessed surface section (45) is arranged adjacent to or within the clamping face (41).

5. Clamping component according to one of the preceding claims, **characterized in that** the highest point (62) of the cutting edge (61) protrudes beyond the clamping face (41) by between 0.4 and 0.6 mm.

6. Clamping component according to one of the preceding claims, **characterized in that** the cutting edge (61) is provided with a blade radius (65), wherein the blade radius (65) is preferably between 0.1 and 0.2 mm.

7. Clamping component according to one of the preceding claims, **characterized in that** the clamping face (41) is designed substantially in the form of a circular cylinder, wherein the cutting edge (61) is arranged substantially tangentially in relation to the clamping face (41).

8. Clamping component according to Claim 7, with reference back to Claim 3, **characterized in that** the clamping component (40) is designed in the form of a half-shell (42), wherein the recessed surface section (45) is provided on at least one longitudinal-side border (44) of the half-shell (42).

9. Clamping component according to Claim 8, **characterized in that** the clamping component (40) is provided with an aligning projection (49) in the region of the clamping face (41), it being possible for the aligning projection to engage into a groove (25) of the profile body (20), which groove runs in the longitudinal direction (22).

10. Clamping component according to one of the preceding claims, **characterized in that** the clamping component (40) is composed of zinc or a zinc alloy or of aluminium or an aluminium alloy.

11. Connecting arrangement (10) comprising at least one profile body (20) which is composed of metal and comprising at least one clamping component (40) according to one of the preceding claims, wherein the clamping face (41) of the clamping component (40) is matched to the profile body (20), wherein the clamping component (40) is clamped to the profile body (20) by means of the clamping face (41), and wherein the blade (60) has penetrated into the profile body (20).

## Revendications

1. Composant de serrage (40) en métal, pour serrer un corps profilé (20) en métal, comprenant
au moins une surface de serrage (41) adaptée au corps (20) du profilé et au moins une lame (60) dotée d'un tranchant de lame (61) qui déborde au-delà de la surface de serrage (41) de telle sorte que la lame (60) puisse pénétrer dans le corps profilé (20) lorsque le composant de serrage (40) serre le corps profilé (20),
le composant de serrage (40) comprenant un moyen d'engagement (46) qui permet d'appliquer une force de serrage,
le tranchant de lame (61) touchant d'abord ponctuellement le corps profilé (20) pendant le serrage du composant de serrage (40) sur le corps profilé (20), une partie croissante (54) du tranchant de lame (61) pénétrant ensuite dans le corps profilé (20), **caractérisé en ce que**
le tranchant de lame (61) est incurvé de manière convexe par rapport à la surface de serrage (41) et
**en ce que** le tranchant de lame (61) est disposé essentiellement transversalement par rapport à l'axe longitudinal (22) du corps profilé (20).

2. Composant de serrage selon la revendication 1, **caractérisé en ce que** le tranchant de lame (61) est incurvé en cercle ou en ellipse.

3. Composant de serrage selon l'une des revendications précédentes, **caractérisé en ce qu'**une section de surface (45) en creux par rapport à la surface de serrage (41) est prévue sur le composant de serrage (40), la lame (60) étant disposée au niveau de la section de surface (45) en creux.

4. Composant de serrage selon la revendication 3, **caractérisé en ce que** la section de surface (45) en creux est disposée au voisinage de la surface de serrage (41) ou à l'intérieur de cette dernière.

5. Composant de serrage selon l'une des revendications précédentes, **caractérisé en ce que** le point le plus élevé (62) du tranchant de lame (61) déborde de la surface de serrage (41) de 0,4 à 0,6 mm.

6. Composant de serrage selon l'une des revendications précédentes, **caractérisé en ce que** le tranchant de lame (61) est doté d'un rayon de lame (65), le rayon de lame (65) étant compris de préférence entre 0,1 et 0,2 mm.

7. Composant de serrage selon l'une des revendications précédentes, **caractérisé en ce que** la surface de serrage (41) est essentiellement en forme de cylindre circulaire, le tranchant de lame (61) étant disposé essentiellement tangentiellement par rapport à la surface de serrage (41).

8. Composant de serrage selon la revendication 7 dans la mesure où elle est subordonnée à la revendication 3, **caractérisé en ce que** le composant de serrage (40) présente la forme d'une demi-coquille (42), la section de surface (45) en creux étant prévue sur au moins un bord longitudinal (44) de la demi-coquille (42).

9. Composant de serrage selon la revendication 8, **caractérisé en ce que** le composant de serrage (40) est doté au niveau de la surface de serrage (41) d'une saillie d'alignement (49) qui peut s'engager dans une rainure (25) qui s'étend dans le sens de la longueur (22) du corps profilé (20).

10. Composant de serrage selon l'une des revendications précédentes, **caractérisé en ce que** le composant de serrage (40) est réalisé en zinc ou en alliage de zinc, en aluminium ou en alliage d'aluminium.

11. Ensemble de liaison (10) comprenant au moins un corps profilé (20) en métal et au moins un composant de serrage (40) selon l'une des revendications précédentes, la surface de serrage (41) du composant de serrage (40) étant adaptée au corps profilé (20), le composant de serrage (40) étant serré sur le corps profilé (20) par l'intermédiaire de la surface de serrage (41) et la lame (60) étant enfoncée dans le corps profilé (20).
